Europäisches Patentamt

European Patent Office

Office européen des brevets

(19)

(11) Publication number : **0 664 201 A2**

# EUROPEAN PATENT APPLICATION

(12)

(21) Application number : 95200091.7

(22) Date of filing : 14.01.95

(51) Int. Cl.⁶ : **B29C 49/06**, // (B29K67/00, 69:00)

(30) Priority : 20.01.94 IT MI940072

(43) Date of publication of application :
26.07.95 Bulletin 95/30

(84) Designated Contracting States :
AT BE DE ES FR GB NL

(71) Applicant : ENICHEM S.p.A.
Piazza della Repubblica, 16
I-20124 Milano (IT)

(72) Inventor : Occhiello, Ernesto
Via dell'Archivio 1-c
I-28100 Novara (IT)
Inventor : Gennaro, Antonio
Via Giovanni XXIII, 5
I-28062 Cameri (Novara) (IT)
Inventor : Giannotta, Giorgio
Via Piave, 8
I-28100 Novara (IT)
Inventor : Locatelli, Lino
Piazza IV Novembre, 11
I-27029 Vigevano ( Pavia ) (IT)

(74) Representative : Fusina, Gerolamo et al
Ing. Barzanò & Zanardo Milano S.p.A,
Via Borgonuovo, 10
I-20121 Milano (IT)

(54) **Method for producing reusable bottles formed from a mixture of pet and pc.**

(57) A method for producing reusable transparent bottles for carbonated drinks, comprising moulding by means of an injection-blow moulding cycle a thermoplastic mixture consisting of polyethyleneterephthalate (PET) and polycarbonate (PC) in which the PC quantity is between 0.5 and 50 wt%.

EP 0 664 201 A2

This invention relates to a method for producing reusable transparent bottles from mixtures of polyethyleneterephthalate (PET) and polycarbonate (PC).

More specifically the invention relates to a method for producing reusable transparent bottles from PET-PC mixtures by an injection-blow moulding cycle, which can be used as containers for carbonated drinks.

Still more specifically the invention relates to a method for producing reusable transparent bottles from PET-PC mixtures, the bottles produced, and the parisons to be moulded for producing said bottles.

The use of reusable bottles of thermoplastic material for carbonated drinks has become prominent in recent years especially in countries in which monetary deposits for plastic containers for liquids are required from consumers.

A description of the requirements for such bottles, in particular PET bottles, can be found in European patent 465,040.

According to this patent, the basic requirement is that the bottle must be reusable up to 20 times. Each reuse cycle requires firstly its washing for about 20 minutes at a temperature currently of about 60°C in a solution made alkaline with sodium hydroxide. This is followed by its filling on normal automatic lines with liquids, which may be the same as the original, after which it is distributed.

In terms of the manufactured article, the normal requirements imposed by the carbonated drink industry apply, including mechanical compression strength, barrier action against carbon dioxide, low aldehyde and particularly acetaldehyde content, geometrical and dimensional requirements etc. The current industrial standard requires a weight of about 100-110 g for bottles of 1.5 litres capacity (against an average of 40-50 g for non-reusable bottles).

Reusable PET bottles are produced by an injection blow moulding process, a description of which can be found for example in an article by Christopher Irwin, published in "Encyclopedia of Polymer Science and Technology", Vol. 2, page 447, published by Wiley, New York, 1985.

The first stage of this process is the production of essentially tubular parisons by injection moulding. In the case of reusable bottles these parisons have a wall thickness of the order of 6-7 mm (against about 3 mm for conventional non-reusable bottles), this giving rise to serious problems because of the characteristics of the material used for their production.

In this respect, PET has a moderate tendency to crystallize when molten, with a maximum crystallization rate at temperatures close to 160-170°C. Hence the greater the parison thickness, the less efficient is its cooling by the mould, which is maintained typically at a temperature of 6-10°C.

In addition, during the blow moulding stage a longer time is required for correct filling of the cavity. In this respect, production cycles for reusable bottle parisons currently last close to 45 seconds against the 17-23 seconds for conventional bottle parisons.

Both these factors mean that the material remains in the region of highest crystallization rate from the molten state for a time which is considerably higher for parisons for non-reusable bottles, with a consequent high probability of obtaining opaque parisons due to the formation of crystals of sufficient size to significantly alter light diffusion.

In order to overcome this problem, modifications have been proposed to the PET used. Good results have been obtained with PET modified at the macromolecular level with cyclohexanedimethanol. The PET obtained in this manner has extremely slow crystallization kinetics and generally enables reusable transparent bottles to be obtained.

Other important factors with regard to the injection stage include those which can be summarized by the general term of workability.

This comprises the ability to obtain the article within a sufficiently wide range of process conditions (temperature, extruder r.p.m., cooling water temperature, cycle duration, pressure etc.) to enable the material to be worked by forming machines of different origin and variable maintenance and reliability levels.

The second stage of reusable bottle production is the blow moulding of the parison. As stated in the said article of C.

Irwin, this stage consists firstly of heating the parison to a temperature of the order (in the case of PET) of 100-110°C. The parison is then subjected firstly to mechanical stress by a rod which pushes the material towards the bottom of the mould, then to pneumatic stress by blowing air which pushes the material towards the mould walls. Alternatively, the bottle can be formed by blowing alone, without the aid of the stretching rod.

The most important requirement for the blow moulding cycle is the workability of the material, in the sense of ease of proper distribution of the PET to obtain the required thickness, with a certain flexibility in combining the various process parameters (parison temperature, force applied to the stretching rod, blowing pressure and rate).

The present applicant has now found that particular PET-based compositions, in particular PET-PC mixtures, are suitable for preparing reusable transparent bottles for carbonated drinks in that they unexpectedly satisfy the aforesaid requirements.

PET-PC mixtures are known in the literature, for example in the article by D.R. Paul, J.W. Barlow and H. Keskkula, published in "Encyclopedia of Polymer Science and Technology", Vol. 12, page 399, published by Wiley, New York, 1988. However their application to the production of hollow containers is new, their surprising adaptability to the production of reusable bottles and the relative parisons not having previously been reported.

In this respect, in the case of parison production, which certainly represents the most delicate step in the bottle preparation process, it has been observed that even though the crystallization rate of PET-PC mixtures is decidedly higher than for the PET modified with cyclohexanedimethanol currently used for producing reusable bottles, transparent parisons are obtained.

This result is even more surprising in view of the fact that other modified PETs still in the experimental stage, and having semi-crystallization times similar to the PET-PC mixture, produce opaline parisons with clear evidence of crystallite formation.

A workability exceeding that of conventional PETs has also been noted, in that the process temperature, cycle time, extrusion conditions, injection pressure etc. can be chosen within a wide range. Finally, with regard to the blow moulding stage a considerable material fluidity has been noted, with the ability to obtain the required material distribution within wide process limits.

The present invention therefore provides a method for producing reusable transparent bottles for carbonated drinks, comprising moulding by means of an injection-blow moulding cycle a thermoplastic mixture consisting of polyethyleneterephthalate (PET) and polycarbonate (PC) in which the PC quantity is between 0.5 and 50 wt%, and preferably 5-25 wt%.

The term "reusable transparent bottles for carbonated drinks" as used in the present description and claims means bottles of the currently marketed type described in European patent 465,040.

Examples of such bottles are those having a capacity of 1.5 litres and a weight of about 100-110 g or a capacity of 1 litre and a weight of about 80-90 g.

According to the present invention the moulding process for the thermoplastic PET-PC mixture comprises an injection-blow moulding cycle. This cycle can be carried out in two stages, the first comprising the formation of an essentially tubular parison having a thickness exceeding 4.5 mm, generally between 5 and 9 mm, and a weight exceeding 80 g, generally between 80 and 130 g, the second stage comprising blow moulding the obtained parison while maintained at a temperature of between 100 and 120°C, possibly in combination with mechanical stretching in accordance with that described in "Encyclopedia of Polymer Science and Technology", Vol. 2, page 447, published by Wiley, New York, 1985, or in European patent EP 465,040. The two stages can be performed in a single apparatus or in separate forming machines.

The PET used in the present invention is a polymer the chemical structure of which generally consists essentially of a succession of terephthaloyl and 1,2-dioxyethylene units. This definition includes both the polyethyleneterephthalate homopolymer and the copolymers derived from it by substituting a fraction not exceeding 5 mol% of the terephthaloyl and/or 1,2-dioxyethylene structural units with property-modifying accessory structural units, these units being introducible by copolyesterification of the polyethyleneterephthalate with dicarboxylic acids such as isophthalic acid, 2,6-naphthalenedicarboxylic acid, 1,4-cyclohexanedicarboxylic acid, 4,4'-biphenyldicarboxylic acid or 4,4'-oxydibenzoic acid, or with hydroxyacids such as p-hydroxybenzoic acid, or with aliphatic or cycloaliphatic diols such as diethyleneglycol or 1,4-cyclohexanedimethanol. This PET can be produced either starting from the appropriate diacids, diols or hydroxyacids by direct polyesterification processes, or from diesters of the appropriate diacids, diols or hydroxyesters by polytransesterification processes, as known in industrial practice.

Preferred PETs are those having a viscosity in solution, measured in accordance with ASTM D 4603-86, of between 0.5 and 1.5 dl/g, and in particular between 0.6 and 1.05 dl/g.

The PC used in the present invention is a conventional polymer obtained interfacially or in the molten state from phosgene and Bisphenol-A. The preferred polycarbonate has a molecular weight of less than about 60,000, and generally between 10,000 and 60,000.

The PET-PC mixture used in the method of the present invention can be formed during the injection blow moulding. However, even though there are no basic objections to the direct use of the two components, pre-mixing in an extruder is preferred. In such a case a limited effect of transesterification can be obtained, hence the compatibility between the two polymers is favoured. A further advantage of pre-mixing relates to the drying cycle. In this respect, PET and PC are usually dried at different temperatures (about 180°C and 120°C respectively), resulting in handling problems during industrial production. In contrast the pre-mixture can be dried directly at the PET temperature, which being higher results in improved efficiency, hence favouring acceleration of the operations involved in moulding.

The conditions of the injection blow moulding cycle according to the present invention can be adjusted on the basis of the forming machines currently available for preparing reusable bottles based on PET modified with cyclohexanedimethanol. In any event, no important modifications are required over the conventional cycle (for example, cooling at a lower temperature than the normal). More particularly, during the blow moulding stage nothing differs from conventional procedures.

Some examples are given hereinafter to better illustrate the present invention, but without however limiting it.

EXAMPLE 1

A PET of intrinsic viscosity 1.03 produced by Inca international was mixed with a PC Makrolon 2000 produced by Bayer.

The PET was dried at 120°C for 4 hours and then at 180°C. The PC was dried at 120°C for 4 hours. A two-screw corotating Berstorff ZE 25 extruder was used. The feed region was maintained under nitrogen to prevent hydrolytic degradation. The PET and PC were fed into separate hoppers, both provided with a gravimetric feeder. The respective throughputs were 4 and 1 kg/hour. The extruder was divided into eight regions, the first being the feed region and the sixth being provided with apparatus for extracting volatiles under vacuum. Temperatures of 32°C, 270°C, 280°C, 270°C, 250°C, 250°C, 250°C and 250°C were set. The screw had a diameter of 25 mm and a length of 33 diameters. A speed of 300 r.p.m. was used.

The extruded product was cooled in water and then granulated. After undergoing a drying cycle identical to that stated for the PET, its semi-crystallization time at 160°C was determined, as shown in the table. This was derived from a DSC measurement (differential scanning calorimetry using a Perkin-Elmer DSC-7), by the following procedure:
- the sample was heated to 280°C and maintained in the molten state for 2 minutes in order to destroy any crystalline centres;
- cooling was effected rapidly (150°C/minute) until the required temperature was achieved;
- maintaining the temperature constant, heat transfer was plotted as a function of time;
- the semi-crystallization time was assumed to be that corresponding to an area of one half the typical area of the exothermic crystallization peak.

EXAMPLE 2

A PET, modified with cyclohexanedimethanol, (intrinsic viscosity 0.86 dl/g), marketed by Eastman Kodak as 9921W, was mixed with a PC Makrolon 2400 produced by Bayer. The PET was dried at 120°C for 4 hours and then at 180°C. The PC was dried at 120°C for 4 hours.

A two-screw corotating Berstorff ZE 25 extruder was used under similar conditions to the preceding, but with throughputs of 4.5 and 0.5 kg/hour for the PET and PC respectively, and a screw speed of 200 r.p.m.

The semi-crystallization time was obtained by the method described in Example 1, and is shown in the table.

COMPARATIVE EXAMPLE 1

The commercial PET 9921, produced by Eastman Kodak and commonly used for producing reusable bottles and relative parisons, was measured for semi-crystallization time at 160°C by the method described heretofore, to obtain the result shown in the table.

COMPARATIVE EXAMPLE 2

A copolyester with a semi-crystallization time similar to that of the mixture of Example 1, was prepared by the following method.

A polymerization reactor of approximately 40 litres capacity was placed in a nitrogen atmosphere and fed with 18.43 kg (95 moles) of dimethylterephthalate, 1.22 kg (5 moles) of dimethylnaphthalene -2,6-dicarboxylate, 0.2 kg of diethyleneglycol and 13.64 kg (220 moles) of ethylene glycol. The reaction mixture was heated to 140°C, and a catalytic solution added consisting of 3.06 g of magnesium acetate heptahydrate, 0.7 g of manganese acetate tetrahydrate, 1.25 g of zinc acetate dihydrate, 2.84 g of cobalt acetate tetrahydrate and 1.64 g of sodium benzoate in 100 ml of ethylene glycol, after which the temperature of the reaction mass was raised to 180°C. Methanol began to distil off at this temperature. When methanol distillation was complete (about 6 kg) and about 200 g of ethylene glycol had been removed, a solution of 4.97 g of phosphoric acid in 100 ml of ethylene glycol and a solution of 8.67 g of antimony trioxide in 600 ml of ethylene glycol were added to the reaction mixture at a temperature of 230°C. The pressure was gradually reduced to 0.9 torr and the temperature increased to 280°C, with the result that the excess ethylene glycol distilled off and the reaction mass gradually assumed an increasingly viscous consistency. After about 2 hours and 40 minutes of reaction under high vacuum at 280°C, with the pressure in the hydraulic circuit controlling the agitator at 32 bar and the agitator speed 100 r.p.m., the polymer was extruded and granulated.

The polymer was then regraded in a solid state polymerization reactor of about 50 litres capacity for 25 hours at a pressure of about 0.1 torr, with the temperature of the oil in the reactor heating jacket at 240°C.

The corresponding semi-crystallization time is shown in the table.

COMPARATIVE EXAMPLE 3

Parisons (weight 108 g, body thickness about 7 mm) were produced as an intermediate step in bottle production, using an injection moulding press manufactured by B & B, Brescia, operating with a single cavity mould.

The material 9921 of Eastman Kodak, commonly used for this type of process, was used as reference material. Before moulding, the material was dried at 180°C for 5 hours, using a Piovan drier located directly in the feed hopper.

The temperature of the extrusion regions was set conventionally at 250°C and the cycle time was about 60 seconds. The mould was cooled with water at 7°C.

The material 9921 has a much longer semi-crystallization time than the other materials shown in the table. Parisons of excellent transparency were obtained.

COMPARATIVE EXAMPLE 4

The parison preparation test was repeated using the experimental copolyester of Comparative Example 2, having a semi-crystallization time at 160°C close to that of the materials according to the invention.

The same apparatus and same drying cycle as in Comparative Example 3 were used, however the temperature was set at 255°C, the cycle time at 65 seconds and the water temperature at 7°C.

The relative parisons were much more opaque than those of Comparative Example 3, indicating a problem of too rapid crystallization.

EXAMPLE 3

The PET-PC mixture of Example 1 was moulded using an apparatus and drying cycle identical to those of the preceding examples.

Transparent parisons were able to be obtained at a temperature of 240°C and a cycle time of about 45 seconds, these being much lower than in the case of Comparative Example 3. This result is very surprising, in that the semi-crystallization time is dramatically less than that of the material 9921 and similar to that of the copolyester of Comparative Example 2, which however results in opaline parisons.

EXAMPLE 4

The PET-PC mixture of Example 2 was moulded using an apparatus and drying cycle identical to those described heretofore.

Transparent parisons were able to be obtained at a set temperature of 255°C and a cycle time of about 60 seconds, these parameters being similar to those used for the material 9921 (Comparative Example 3), even though the semi-crystallization time is decidedly low, as shown in the table.

COMPARATIVE EXAMPLE 5

The parisons produced in Comparative Example 3 were subjected to a blow moulding cycle using a single mould apparatus of Krupp origin but modified by Tooling Preform Systems. The apparatus consists of a parison heating oven using infrared lamps, and a blow moulding unit in which the hot parison is previously stressed by a stretching rod and then subjected to pre-blowing and blowing.

The parisons were heated to 100°C and then subjected to stretching-blowing. A good ease of material distribution was observed, a transparent bottle of 1.5 litres capacity being obtained.

COMPARATIVE EXAMPLE 6

The parisons of Comparative Example 4 were heated to 100°C and then subjected to stretching-blowing. Again in this case material distribution was good, but the bottle obtained was distinctly more opaque than the case of Comparative Example 5.

EXAMPLE 5

The parisons of Example 3 were heated to 110°C and then subjected to stretching-blowing. Ease of distribution was excellent and the characteristics of the bottle obtained were totally similar to those of the bottle obtained with the reference material and distinctly better than those of the bottle obtained from a material having a similar semi-crystallization time.

TABLE

| EXAMPLE | SEMI-CRYSTALLIZATION TIME (MINUTES) |
|---------|-------------------------------------|
| 1 | 5.3 |
| 2 | 3.3 |
| Comp 1 | 18.0 |
| Comp 2 | 5.5 |

## Claims

1. A method for producing reusable transparent bottles for carbonated drinks, comprising moulding by means of an injection-blow moulding cycle a thermoplastic mixture consisting of polyethyleneterephthalate (PET) and polycarbonate (PC) in which the PC quantity is between 0.5 and 50 wt%.

2. A method as claimed in claim 1, wherein the PC content is between 5 and 25 wt%.

3. A method as claimed in claim 1 or 2, wherein the injection-blow moulding cycle comprises the formation of an essentially tubular parison having a thickness exceeding 4.5 mm, generally between 5 and 9 mm, and a weight exceeding 80 g, generally between 80 and 130 g, and blow moulding the obtained pariscn while maintained at a temperature of between 100 and 120°C, possibly in combination with mechanical stretching.

4. A method as claimed in any one of the preceding claims, wherein the PET consists of the polyethyleneterephthalate homopolymer or copolymers derived from it by substituting a fraction not exceeding 5 mol% of the terephthaloyl and/or 1,2-dioxyethylene structural units.

5. A method as claimed in claim 4, wherein the PET has a viscosity in solution, measured in accordance with ASTM D 4603-86, of between 0.5 and 1.5 dl/g.

6. A method as claimed in claim 1, 2 or 3, wherein the PC is a polymer obtained from phosgene and Bisphenol-A having a molecular weight of less than about 60,000.

7. Parisons for reusable transparent bottles for containing carbonated drinks, obtained from a PET-PC mixture in which the PC quantity is between 0.5 and 5.0 wt%, having an essentially tubular shape, thickness exceeding 4.5 mm, and weight exceeding 80 g.

8. Reusable transparent bottles for carbonated drinks obtained by a injection blow moulding cycle from a mixture consisting of PET and PC in which the PC quantity is between 0.5 and 50 wt%.

9. Bottles as claimed in claim 8, having a capacity of 1.5 litres and a weight of about 100-110 g, or a capacity of 1 litre and a weight of about 80-90 g.

10. Bottles as claimed in claim 8 or 9, obtained by blow moulding the parison of claim 7 while maintained at a temperature of between 100 and 120°C, possibly in combination with mechanical stretching.